# EUROPEAN PATENT APPLICATION

(11) **EP 2 890 148 A1**
(43) Date of publication of application: **01.07.2015**
(21) Application number: 13199640.7
(22) Date of filing: 27.12.2013
(51) Int. Cl.: H04N 21/84, H04N 7/088, G08B 13/196, G06F 17/30

(54) **System and method for video surveillance**

(71) Applicant: Patents Factory Ltd. Sp. z o.o., 66-002 Nowy Kisielin (PL)
(72) Inventor: Paczkowski, Jacek, 66-002 Nowy Kisielin (PL); Nalewa, Tomasz, 66-002 Nowy Kisielin (PL)
(74) Representative: Blonski, Pawel

(57) **Abstract**

A method for video surveillance, the method comprising the steps of receiving a sequence of images that are to be analyzed; detecting at least one moving object in said sequence of images; the method further comprising the steps of: creating a database of moving objects, said database comprising objects descriptors; adding said database to a selected frame of said sequence of images; transmitting an output stream comprising said sequence of images and said database.

## Description

The present invention relates to a system and a method for video surveillance. In particular the present invention relates to intelligent surveillance systems comprising intelligent video cameras.

Surveillance systems and in particular video surveillance systems have become increasingly popular during the recent decade. Involvement of human operators in such systems frequently results in drawbacks such as high labor cost, limited capability for multiple screens, inconsistency in judgment. In response to that intelligent surveillance systems have been developed that have the aim of automatically identifying abnormal behaviors in videos.

The intelligent surveillance systems involve objects classification, learning and analysis of behavior based on texture and optical flow. It is desirable for such systems to operate in real-time and hence they are heavy on hardware requirements.

A prior art publication of US 8437503 B2 entitled "Method for detecting a moving object in an image stream" discloses a method for detecting a moving object in a stream of images taken at successive instants, of the type comprising, for each zone of a predefined set of zones of at least one pixel of the image constituting a current image, a step of determining whether the zone belongs to the moving object. The method also comprising a step of searching in at least one preceding image of the stream and along at least one predefined direction and orientation, for another zone determined as belonging to a moving object, and a step of negating the fact that said zone belongs to a moving object if the search is negative.

Another prior art publication US 7436887 B2 entitled "Method and apparatus for video frame sequence-based object tracking" discloses an apparatus and method for the analysis of a sequence of captured images covering a scene for detecting and tracking of moving and static objects and for matching the patterns of object behavior in the captured images to object behavior in predetermined scenarios. The apparatus and method may be utilized in a monitoring and surveillance system. The surveillance system is operative in the detection of potential alarm situation via a recorded surveillance content analysis and in the management of the detected unattended object situation via an alarm distribution mechanism. The object tracking apparatus supports the object tracking method that incorporates a unique method for detecting, tracking and counting objects across a sequence of captured surveillance content images. Through the operation of the object tracking method the captured content is analyzed and the results of the analysis provide the option of activating in real time a set of alarm messages to a set of diverse devices via a triggering mechanism. In order to provide the context in which the object tracking apparatus method is useful, several exemplary associated applications will be briefly described. The method of the present invention may be implemented in various contexts such as the detection of unattended objects (luggage, vehicles or persons), identification of vehicles parking or driving in restricted zones, access control of persons into restricted zones, prevention of loss of objects (luggage or persons) and counting of persons, as well as in police and fire alarm situations. In likewise manner the object tracking apparatus and method described here in may be useful in myriad of other situations and as a video objects analysis tool.

Yet another prior art publication US 6678413 B1 entitled "System and method for object identification and behavior characterization using video analysis" discloses systems and methods for finding the position and shape of an object using video. The system includes a system with a video camera coupled to a computer in which the computer is configured to automatically provide object segmentation and identification, object motion tracking (for moving objects), object position classification, and behavior identification. In a preferred embodiment, the present invention may use background subtraction for object identification and tracking, probabilistic approach with expectation-maximization for tracking the motion detection and object classification, and decision tree classification for behavior identification. Thus, the present invention is capable of automatically monitoring a video image to identify, track and classify the actions of various objects and the object's movements within the image. The image may be provided in real time or from storage. The invention is particularly useful for monitoring and classifying animal behavior for testing drugs and genetic mutations, but may be used in any of a number of other surveillance applications.

The aim of the development of the present invention is an improved method and system for video surveillance.

The object of the present invention is a method for video surveillance, the method comprising the steps of: receiving a sequence of images that are to be analyzed; detecting at least one moving object in said sequence of images; the method further comprising the steps of: creating a database of moving objects, said database comprising objects descriptors; adding said database to a selected frame of said sequence of images; transmitting an output stream comprising said sequence of images and said database.

Preferably, said database comprises the following data:
- a time stamp;
- an object's identifier;
- object's location;
- the surface of the object;
- an outline of the object.

Preferably, said database further comprises the following data:
- vertices coordinates of a smallest rectangle circumscribed on the object;
- Euler's value or central moments.

Preferably, said database further comprises the following data:
- camera's identifier;
- camera's location;
- camera's orientation;
- camera's settings.

Preferably, the method further comprises the steps of: receiving a second sequence of images; detecting moving objects in said second sequence of images; updating said database; and transmitting said database together with said second sequence of images.

Preferably, the object's location is defined using spherical coordinates.

Another object of the present invention is a video surveillance camera comprising: image capture system configured to acquire images data; a memory configured to store a sequence of images obtained from said image capture system; a data bus communicatively coupled to said memory; a controller configured to manage the internal components; the video surveillance camera further comprising: a movement analysis module configured to detect at least one moving object in said sequence of images; a database configured to store records of moving objects, said database comprising objects descriptors; an alert generator module configured to analyze content of said database in order to detect threats requiring attention; a video output module configured to add said database to a selected frame of said sequence of images and to output said database and said sequence of images; transmitting an output stream comprising said sequence of images and said database.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects of the invention presented herein are accomplished by providing a computer-implemented method and system for movement detection in images sequence. Further details and features of the present invention, its nature and various advantages will become more apparent from the following detailed description of the preferred embodiments shown in a drawing, in which:
FIG. 1 presents a method according to the present invention;
FIG. 2 presents a system according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that ma-nipulates and transforms data represented as physical (electronic) quantities within the computer's registers and memories into other data similarly represented as physical quantities within the memories or registers or other such information storage.

The present invention is a method of detecting movement in a video images sequence, classifying the detected movement, providing suitable output defining such movement and optionally providing alerting means, which are all preferably integrated into a surveillance camera device.

Each object in motion is then stored as a record in the database. The database is a basis for classification of objects in terms of the risks posed. Classification is a query on a database with predefined threshold parameters for each field of the record. The method according to the present invention is characterized by very low computational complexity.

The aim of the present invention is to increase the capabilities of video monitoring systems first by transferring part of the functionality of the system in the control panel to the cameras and secondly by providing such cameras with new objects classification and database-related features.

Modern data processors used in surveillance cameras have sufficiently high efficiency, hence it is possible to use their computing power to analyze a scene observed by the camera. The main task of the modified camera is motion analysis of objects in the camera's field of view and classification of threats with optional activation of an alarm when the observed threat requires attention of a system's operator.

The present invention defines a set of data that the camera sends to a central surveillance station along with the video signal. This solution allows for a two-step analysis of threats: a simple analysis is executed by the camera itself, if necessary, by notifying the alarm while a more complex analysis is performed at the surveillance center. Importantly, information being a result of the analysis carried out by the camera is added to the video signal in such a way as not to interfere with the standard video decoders. This means that the surveillance center may be use, alongside standard features, additional software or hardware that will extract additional information from the video stream and use this information to perform complex analysis of a given situation.

A stream comprising additional information sent by the camera can be analyzed together with the corresponding streams from other cameras covering the same area. This enables spatial analysis incorporating three-dimensional character of the surrounding area.

The object of the present invention is to combine video data with data regarding detected objects in a video stream, the video stream being possible to be decoded by standard decoders. The particular selection of data and their form allows the construction of simple monitoring systems where the whole analysis is performed by a camera and there are only recorders and monitors at the main surveillance center. Alarms are reported directly by the camera(s). In such case, from the stream of data describing the objects there are selected those objects that caused the alarm notification, in order to present them to the system's operator preferably with an audible signal alarm. An imposition of a mask distinguishing such a hazardous object on the image of the camera is executed by the camera itself, so that the monitoring center may use only a regular monitor.

Complex systems can use all the additional data sent by a modified camera for in-depth analysis of the situation. In complex systems there is responsible an analytical program for the visualization of threats. Cameras do not impose a distinctive mask objects when they are working in a complex system.

The concept of combining video data with analytical data is related to a preferably efficient algorithm for identification of objects in motion. The lower the computational complexity of this algorithm the more suitable it is for implementation in cameras.

The implementation of such algorithm in the camera forces the transmission of additional data from the camera to the system that executes the analysis of complex tactical situation. Once available, such data enable three-dimensional observation of a given site at the analytical level (one can create a database of three-dimensional objects moving in three dimensional space). There is only necessary knowledge of the relative position and orientation of the cameras. This creates interesting possibilities but also forces sending additional data in the stream to the monitoring center.

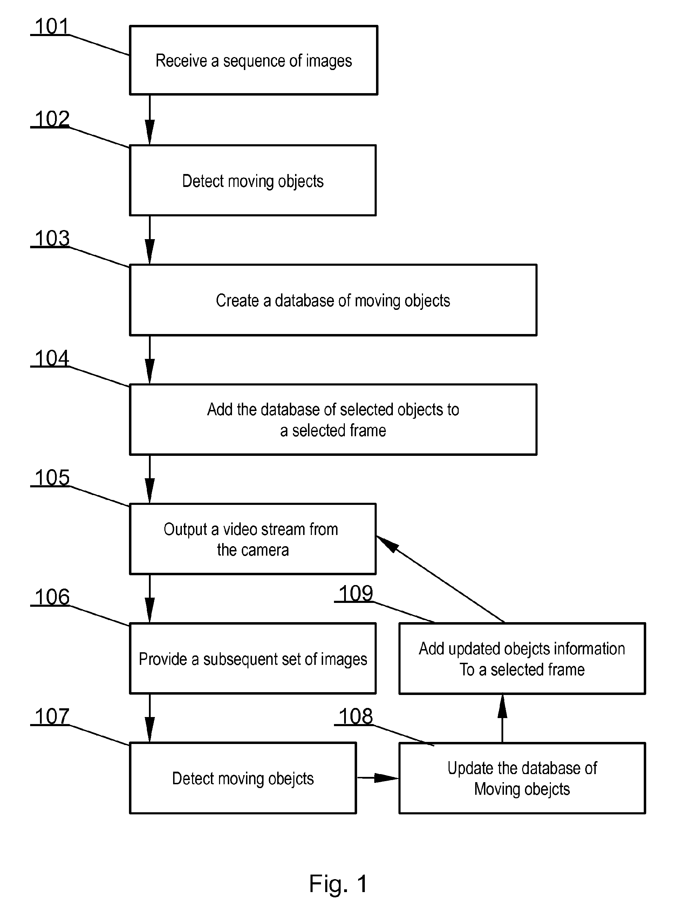

FIG. 1 presents a method according to the present invention. The procedure starts at step 101 from receiving a sequence of images that are to be analyzed. Typically such sequence will comprise several up to a hundreds of images. However a different number may be used. Subsequently, at step 102, there are detected moving object(s) in the input sequence of images. One of the prior art methods for detection of moving objects, as presented in the background of the present invention, may be utilized for this purpose.

Next, at step 103, there is created a database of moving objects. Herein such database is called objects descriptors database (DES), which preferably comprises the following fields:
- time stamp (frame's identifier);
- object's identifier;
- object's location (for example location of a geometric center or location of a highest placed pixel);
- the surface of the object;
- outline of the object in a vector form (vertices coordinates specified as absolute values or incremental values with respect to the previous vertex);
- vertices coordinates of a smallest rectangle circumscribed on the object;
- optionally there may be provided other information on the object such as Euler's value or central moments.

The DES database may be added to a video frame being the first frame of the set of N frames analyzed according to the present invention. It may however be added to a different frame of the set of N frames. The analysis based on DES databases of subsequent sets of images allows for determination of objects' movement dynamics. For example, assuming two moving objects have been detected, in the DES database for subsequent frames the same objects will assume different coordinates. If two records of the DES database in two subsequent frames are compared one may calculate velocity of the object based on time difference between the frames.

The DES database may be added to an MPEG transport stream as auxiliary data foreseen by the standard. In case of regular network connections, additional packets may be provided that carry the DES database.

In addition, the DES database stream may less frequently provide data comprising the following information:
- camera's identifier;
- camera's location;
- camera's orientation;
- camera's settings such as current angle of view (zoom settings).

Such information is preferably not added to every frame or sequence because it would be disadvantageous in terms o amount of data to be frequently sent. The data may be sent infrequently unless there has been a change in camera's properties. When a change occurs or a sequence of small changes, the camera properties may be sent frequently till a stable set of properties is set.

Information regarding the location and orientation of the camera and the current zoom are very important in case of a system using data from multiple cameras in order to generate a spatial view of a given situation. Knowing where the cameras are and how they are oriented one may link a database (DES) of one camera with another database (DES) of a second camera. It is necessary to identify the same objects moving in the field of view of both cameras. Data from the database will then allow to calculate a position of moving objects in 3D space. Knowing their location one can calculate for example their size.

Further, knowing the location of physical objects in 3D space in successive moments of time one can, in turn, calculate the speed, acceleration and trajectory of objects.

All these features allow, at the central surveillance system, for automatic estimation of possible threats from various moving objects.

Transmission of data regarding moving objects along with the image, allows for decreasing workload at the central surveillance system. It allows also to construct small and inexpensive systems capable of analyzing threats.

When the DES database has been created, at step 104 of the procedure there is added the database of selected objects to a selected frame output by the camera (sequence of input images). Subsequently at step 105, the output stream is transmitted by the camera. After that, at step 106, the camera provides another sequence of images, in which moving objects will be detected 107. Alternatively, instead of continuing to step 106 the method may return to step 101. In case steps 106 and 107 are executed, at step 108 the DES database is updated. It may be the case that the same objects are detected in different images sequences. In such cases previously stored records of the DES database may be updated instead of recreating the full DES database. Finally, at step 109 of the procedure, the updated DES records and new records are transmitted from the camera to a client device and the process may return to step 105 or 101.

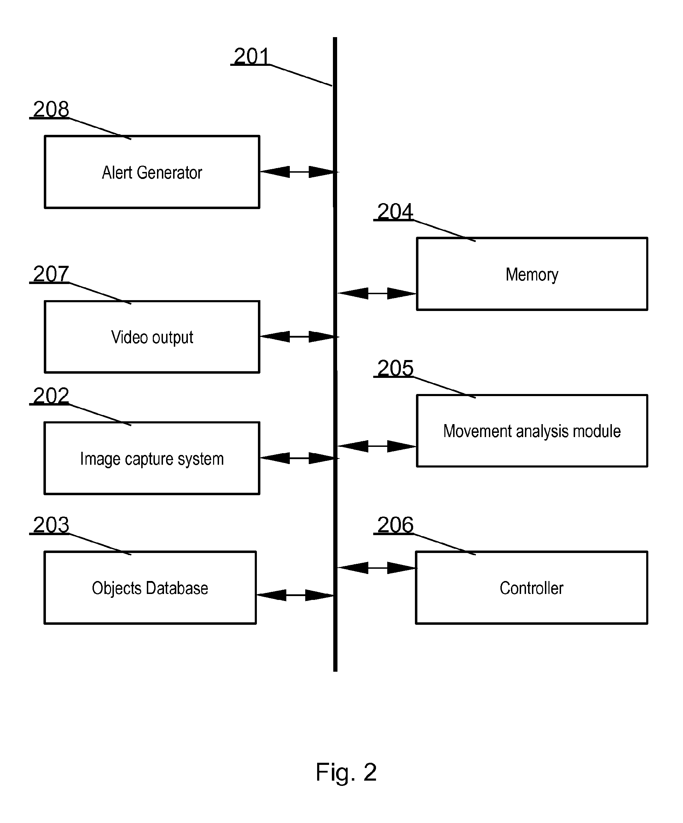

FIG. 2 presents a system according to the present invention. The system may be realized using dedicated components or custom made FPGA or ASIC circuits. The system comprises a data bus 201 communicatively coupled to a memory 204. Additionally, other components of the system are communicatively coupled to the system bus 201 so that they may be managed by a controller 206. An image capture system 202 is responsible for acquiring images data in such as a CMOS or CCD sensor. The acquired images are stored in the memory 204 until a sufficiently long sequence of images may be notified to the controller 206, which shall execute a process of detecting moving objects 102 by a specified movement analysis module 205.

The system also comprises objects database (DES) 203 for storing output of the process of detection of moving objects 102 in a sequence of images carried out by the controller 206 and/or the movement analysis module 205.

Optionally, the system comprises an alert generator module 208 responsible for analysis of content of the objects database 203 in order to detect threats requiring urgent attention.

Lastly, the system comprises a video output module 207 responsible for providing a video data stream (sequence of images that have been analyzed regarding moving objects) comprising the DES database. Such video data stream may be suitable encoded and/or encrypted, for example utilizing MPEG2 or MPEG4 format or the like.

This aforementioned method may be used to build a surveillance camera that will not only compress video data but also detect motion in its field of view. Subsequently such a camera may assess whether to raise the alarm or not. This is important in the case of supervised locations, where for example entrance of an animal in the field of view of the camera, does not constitute threats to the protected location.

In order to make a computer assessment of risk, it is necessary to detect moving objects and classify them into groups of harmless (eg. too small) or threatening (all other cases - the decision has to be taken by a human system operator).

The classification shall be based on the characteristics of the detected moving objects (eg, size, position, speed, acceleration and trajectory). Such a camera may work with a computer monitoring system, receiving both video data and information on detected objects.

In the first advantageous embodiment of the present invention, the location of objects may be given in pixels relative to a zero point of a video frame (eg. Left-bottom corner or image center).

For complex systems, including multiple cameras according to the present invention, there may be utilized spherical coordinates as a second advantageous embodiment. A camera may assume the center of the image capture matrix as a central point or another point, for example located at the center of a multiple camera arrangement.

Spherical coordinates allow for simplification that is very useful for spatial analysis based on data originating from multiple cameras. The simplification is based on merging information regarding camera's location, orientation and zoom properties with data relating to objects detected in a sequence of images.

Assuming that there are supposed to be given data the same as in the first embodiment but in the second embodiment object's data do not relate to location and size within a frame but rather within 3D, physical space observed by a camera. By knowing camera properties, one may transform object's dimensions in a video frame (defined in pixels) into angular dimensions in a spherical coordinate system.

For example a camera capturing frames of 1920x1080 pixels and the lens is such that the horizontal angle of view is ±30°. This means that the leftmost column of the image is perceived at -30° angle and the rightmost column is perceived at +30° angle. Taking into account image proportions, the vertical angle will be ±16.875°. The image center may be assumed as a zero point, which means that the image extends from -960 to +960 pixels horizontally and from -540 to +540 pixels vertically.

For example if a given camera captures an object of a rectangular shape and vertices (coordinates in pixels): 20,-30; 120,-30; 20,50; 120,50. In spherical coordinates this matches: 0.625°,-0.9375°; 3.75°,-0.9375°; 0.625°,1.5625°; 3.75°,1.5625°.

Now suppose that the camera, filming the scene, was directed 45 ° to the right of the north and inclined by 5 ° upward relative to the horizontal center. In order to specify the angular position of the object in real space it is enough to add the orientation of the camera to the angular position of the object in the image. This results in vertices coordinates, of the object, equal to: 45.625 °, 4.0625 °, 48.75 °, 4.0625 °, 45.625 °, 6.5625 °, 48.75 °, 6.5625 °.

In this way, a pyramid of rectangular base has been defined with the apex in the matrix of the camera. If another camera is nearby and determines angular coordinates of the same object, a second pyramid will be obtained with the apex at another known point in the real space. The place, where these two pyramids intersect, designates the position of an object in 3D space.

Importantly, if the camera uses the zoom function to change the magnification, the previous calculations are still correct, provided that there is adjusted the camera angle of view by the zoom ratio. For example, enlarging the image 2x there are reduced the camera's angles of view up to ± 15 ° horizontally and ± 8.4375 ° vertically. The pixels of the object will be 2x bigger but in angular degrees remain the same. Dimensions and location of the detected objects do not therefore depend on the zoom function.

In the video stream there will therefore be present timestamps, camera position (in rectangular coordinates), since providing orientation of the camera and the zoom ratio is no longer necessary because the information is already contained in the position of objects (in spherical coordinates). Each object is defined by its identifier (ID), location (in spherical coordinates) in real space, for example by specifying the geometric center of the object, the object surface will be given not in pixels but rather as a part of a spherical surface, the outline of the object will be defined by the vertices of a polygonal curve in the spherical coordinates. Additionally, there may be given the smallest rectangular based pyramid in which the object (vertices in spherical coordinates) may be enclosed.

It is worth noting that the adoption of the above method, according to the second embodiment of the present invention, results in that if a camera is rotating (changing its orientation) then in an image frame there is changed objects location but after transformation into spherical coordinates and addition of the camera's orientation, the actual position of the objects (in degrees) is not changed (as long as the objects are stationary or moving very slowly).

The adoption of the above-described second embodiment method simplifies the analysis of images from multiple cameras. Indeed, all indicate the location of objects in real space. Spatial analysis radically simplifies owing to such an arrangement.

The area of application of the present invention include video surveillance systems; optical reconnaissance systems; optical guidance systems.

It can be easily recognized, by one skilled in the art, that the aforementioned method for video surveillance may be performed and/or controlled by one or more computer programs. Such computer programs are typically executed by utilizing the computing resources in a computing device such as personal computers, personal digital assistants, cellular telephones, receivers and decoders of digital television or the like. Applications are stored on a non-transitory medium. An example of a non-transitory medium is a non-volatile memory, for example a flash memory or volatile memory, for example RAM. The computer instructions and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for video surveillance, the method comprising the steps of:
• receiving (101) a sequence of images that are to be analyzed;
• detecting (102) at least one moving object in said sequence of images;
the method being **characterized in that** it further comprises the steps of:
• creating (103) a database of moving objects, said database comprising objects descriptors;
• adding (104) said database to a selected frame of said sequence of images;
• transmitting (105) an output stream comprising said sequence of images and said database.

2. The method according to claim 1 **characterized in that** said database comprises the following data:
• a time stamp;
• an object's identifier;
• object's location;
• the surface of the object;
• an outline of the object.

3. The method according to claim 2 **characterized in that** said database further comprises the following data:
• vertices coordinates of a smallest rectangle circumscribed on the object;
• Euler's value or central moments.

4. The method according to claim 1 **characterized in that** said database further comprises the following data:
• camera's identifier;
• camera's location;
• camera's orientation;
• camera's settings.

5. The method according to claim 1 **characterized in that** the method further comprises the steps of:
• receiving (106) a second sequence of images;
• detecting (107) moving objects in said second sequence of images;
• updating (108) said database; and
• transmitting (109) said database together with said second sequence of images.

6. The method according to claim 2 **characterized in that** the object's location is defined using spherical coordinates.

7. A video surveillance camera comprising:
• image capture system (202) configured to acquire images data;
• a memory (204) configured to store a sequence of images obtained from said image capture system (202);
• a data bus (201) communicatively coupled to said memory (204);
• a controller (206) configured to manage the internal components;
the video surveillance camera being **characterized in that** it further comprises:
• a movement analysis module (205) configured to detect (102) at least one moving object in said sequence of images;
• a database (203) configured to store records of moving objects, said database comprising objects descriptors;
• an alert generator module (208) configured to analyze content of said database (203) in order to detect threats requiring attention;
• a video output module (207) configured to add said database to a selected frame of said sequence of images and to output said database and said sequence of images;
• transmitting (105) an output stream comprising said sequence of images and said database.

8. A computer program comprising program code means for performing all the steps of the computer-implemented method according to any of claim 1 when said program is run on a computer.

9. A computer readable medium storing computer-executable instructions performing all the steps of the computer-implemented method according to any of claims 1 when executed on a computer.

## Amended claims

### Amended claims in accordance with Rule 137(2) EPC.

1. A video surveillance camera comprising:
• image capture system (202) configured to acquire images data;
• a memory (204) configured to store a sequence of images obtained from said image capture system (202);
• a data bus (201) communicatively coupled to said memory (204);
• a controller (206) configured to manage the internal components;
the video surveillance camera being **characterized in that** it further comprises:
• a movement analysis module (205) configured to detect (102) at least one moving object in said sequence of images;
• a database (203) configured to store records of moving objects, said database comprising objects descriptors;
• an alert generator module (208) configured to analyze content of said database (203) in order to detect threats requiring attention;
• a video output module (207) configured to add said database to a selected frame of said sequence of images and to output said database and said sequence of images;
• transmitting (105) an output stream comprising said sequence of images and said database.

2. A method for video surveillance, the method comprising the steps of:
• receiving (101) a sequence of images that are to be analyzed;
• detecting (102) at least one moving object in said sequence of images;
the method being **characterized in that** it is implemented in the video surveillance camera according to claim 1 and **in that** it further comprises the steps of:
• creating (103) a database of moving objects, said database comprising objects descriptors;
• adding (104) said database to a selected frame of said sequence of images;
• transmitting (105) an output stream comprising said sequence of images and said database.

3. The method according to claim 2 **characterized in that** said database comprises the following data:
• a time stamp;
• an object's identifier;
• object's location;
• the surface of the object;
• an outline of the object.

4. The method according to claim 3 **characterized in that** said database further comprises the following data:
• vertices coordinates of a smallest rectangle circumscribed on the object;
• Euler's value or central moments.

5. The method according to claim 2 **characterized in that** said database further comprises the following data:
• camera's identifier;
• camera's location;
• camera's orientation;
• camera's settings.

6. The method according to claim 2 **characterized in that** the method further comprises the steps of:
• receiving (106) a second sequence of images;
• detecting (107) moving objects in said second sequence of images;
• updating (108) said database; and
• transmitting (109) said database together with said second sequence of images.

7. The method according to claim 3 **characterized in that** the object's location is defined using spherical coordinates.

8. A computer program comprising program code means for performing all the steps of the computer-implemented method according to any of claim 2 when said program is run on a computer.

9. A computer readable medium storing computer-executable instructions performing all the steps of the computer-implemented method according to any of claims 2 when executed on a computer.
